# EUROPÄISCHE PATENTANMELDUNG

(11) **EP 2 586 558 A1**
(43) Veröffentlichungstag der Anmeldung: **01.05.2013**
(21) Anmeldenummer: 11186531.7
(22) Anmeldetag: 25.10.2011
(51) Int. Cl.: B23K 1/00, B23K 1/008, B23K 3/08

(54) **Verfahren und Vorrichtung zum Abkühlen von gelöteten Flachbaugruppen**

(71) Anmelder: Air Liquide Deutschland GmbH, 40235 Düsseldorf (DE); L'Air Liquide Société Anonyme pour l'Etude et l'Exploitation des Procédés Georges Claude, 75007 Paris (FR)
(72) Erfinder: Liebert, Holger, 40237 Düsseldorf (DE); Ridgeway, Patrick, 41372 Niederkrüchten (DE); Kast, André, 89073 Ulm (DE); Coudurier, Laurent, 40549 Düsseldorf (DE)
(74) Vertreter: Kahlhöfer, Hermann

(57) **Zusammenfassung**

Verfahren zum Abkühlen von gelöteten Flachbaugruppen in einer Kühlzone einer Lötanlage durch mindestens ein Inertgas umfassendes Kühlgas, bei dem das Kühlgas durch eine Mischung des gasförmigen und des flüssigen Inertgases erhalten wird. Bevorzugt wird das Kühlgas in die Kühlzone eingeleitet.

Das erfindungsgemäße Verfahren und die erfindungsgemäße Vorrichtung 1 erlauben in vorteilhafter Weise eine hocheffiziente Kühlung von Flachbaugruppen nach dem Lötvorgang. Das Kühlgas kann nach dem Abziehen aus der Kühlzone 15 vorteilhaft zur Inertisierung der Lötanlage 2 eingesetzt werden.

## Beschreibung

Gegenstand der vorliegenden Erfindung ist ein Verfahren und eine Vorrichtung zum Abkühlen von gelöteten Flachbaugruppen in einer Kühlzone einer Lötanlage, bei der ein Gas zur Kühlung der gelöteten Flachbaugruppen eingesetzt wird. Bevorzugt ist der Einsatz des erfindungsgemäßen Verfahrens und der erfindungsgemäßen Vorrichtung in Reflow-Lötanlagen und/oder Schwall-Lötanlagen.

Lötanlagen zum Löten von Flachbaugruppen weisen üblicherweise eine Vorheizzone, eine Lötzone und eine Kühlzone auf. In der Vorheizzone werden die zu verlötenden Bauteile auf eine Temperatur knapp unterhalb der Schmelztemperatur des Lotes aufgeheizt, in der Lötzone wird die Temperatur auf die Schmelztemperatur des Lotes und gegebenenfalls darüber erhöht. In der Kühlzone erfolgt die Abkühlung der verlöteten Flachbaugruppen. Üblicherweise werden die Flachbaugruppen sukzessive durch die einzelnen Zonen hindurchgeführt.

In der Kühlzone werden üblicherweise Kühlsysteme eingesetzt, die auf einer mechanischen Kühlung und Kälteübertragung mittels eines Kältemittels basieren. Solche Kühlanlagen, die beispielsweise mit Kühlwasser betrieben werden, sind im Betrieb sehr energieintensiv, wenig effizient und somit kostenintensiv. Insbesondere auch im Hinblick auf die dadurch entstehende zusätzliche Umweltbelastung ist die mangelnde Energieeffizienz nachteilig.

Hiervon ausgehend liegt der vorliegenden Erfindung die Aufgabe zugrunde, ein Verfahren und eine Vorrichtung zum Abkühlen von gelöteten Flachbaugruppen anzugeben, bei denen die aus dem Stand der Technik bekannten Nachteile zumindest teilweise überwunden werden.

Diese Aufgaben werden gelöst durch die unabhängigen Ansprüche. Die jeweiligen abhängigen Ansprüche sind auf vorteilhafte Weiterbildungen gerichtet.

Vorteilhafte Weiterbildungen sind auch durch in der Beschreibung oder in den Figuren offenbarte Merkmale gegeben, die beliebig, in technologisch sinnvoller Weise miteinander und mit Merkmalen aus den Ansprüchen kombinierbar sind.

Das erfindungsgemäße Verfahren zum Abkühlen von gelöteten Flachbaugruppen in einer Kühlzone einer Lötanlage durch mindestens ein Inertgas umfassendes Kühlgas zeichnet sich dadurch aus, dass das Kühlgas durch eine Mischung des gasförmigen und des flüssigen Inertgases erhalten wird.

Das bedeutet, dass gemäß der vorliegenden Erfindung vielmehr ein kaltes Gas, welches gegebenenfalls Anteile von flüssigem Inertgas enthalten kann, als Kühlgas zur Kühlung der Flachbaugruppen zum Einsatz kommt, woduch ineffiziente mechanische Kühlsysteme stark unterstützt bzw. ersetzt werden. Durch die erfindungsgemäße Mischung von flüssigem und gasförmigem Inertgas wird teilweise die Verdampfungsenthalpie des flüssigen Inertgases, bzw. die spezifische Wärmekapazität des gemischten Kaltgases zur Kühlung der Flachbaugruppen einsetzbar. Zudem ist es so möglich, durch eine gezielte Mischung von flüssigem Inertgas und gasförmigen Inertgas eine vorgebbare Temperatur des Kühlgases zu erreichen. Da oftmals im Lötprozess ein Inertgas zum Inertisieren der Lötanlage eingesetzt wird, kann das Abgas, also das Kühlgas nach Erfüllen der Kühlfunktion, in vorteilhafter Weise als Inertgas in die Lötanlage eingeführt werden und dort zu einer Inertisierung der Atmosphäre in der Lötanlage dienen. Durch Unterstützung, bzw. den Verzicht auf mechanische Kühlanlagen mit Kühlmitteln ist ein umweltfreundlicherer Betrieb der Anlage möglich. Im Falle einer unterstützenden Kaltgaskühlung können Energieeinsparungen erzielt werden, Neuanlagen können kleiner dimensioniert werden. Bei Ersatz des mechanischen Kühlsystems wird, neben einer 100%igen Energieeinsparung zum Betrieb der Anlage, auf umweltschädliche Kühlmittel wie beispielsweise Ammoniak oder Kohlenwasserstoffe verzichtet, welche heute entsorgt werden müssen. Relativ aufwändige regelmäßige Wartungsvorgänge der mechanischen Kühlanlage entfallen, welche heute aufgrund vorhandener Kühlmittel oft nur durch spezialisierte Firmen durchgeführt werden können. Bevorzugt besteht das Kühlgas ausschließlich aus Inertgas in Gasform und gegebenenfalls in flüssiger, mithin kälteverflüssigter, Form.

Gemäß einer vorteilhaften Ausgestaltung des Verfahrens wird das Kühlgas in die Kühlzone eingeleitet.

Das Kühlgas wird bevorzugt mit einer vorgebbaren Temperatur in die Kühlzone eingeleitet und umströmt dort die gelöteten Flachbaugruppen. Da diese vor allen Dingen direkt stromabwärts der Lötzone noch eine relativ hohe Temperatur aufweisen, wird durch ein Inertgas als Kühlgas , gleichzeitig die Kühlzone inertisiert und oxidative Reaktionen an der noch heißen frisch gelöteten Flachbaugruppe insbesondere im Bereich des Lots verhindert. Zudem können Ablegiereffekte vermieden werden, ein ungestörtes Wachstum intermetallischer Phasen wird gefördert. Durch das erfindungsgemäße Verfahren ist es möglich, eine maximal mögliche Kühlung der Flachbaugruppen zu erreichen, indem beispielsweise der maximal mögliche Temperaturgradient der gelöteten Bauteile eingestellt wird. Dadurch kann insgesamt eine effektivere Kühlung erfolgen, die Kühlzone kann kürzer ausgebildet werden als im Falle einer mechanischen Kühlung mit einem Kältemittel. Zudem kommt es zur Vermeidung von Ablegiereffekten und zur Gefügeverfestigung in der Lötstelle durch Kornverkleinerung. Die Mikrohärte der Lötstellen wird durch das erfindungsgemäße Verfahren im Vergleich zu aus dem Stand der Technik bekannten Verfahren erhöht.

Gemäß einer weiteren Ausgestaltung des Verfahrens wird das Kühlgas durch einen Kühlkörper geleitet, über den die Flachbaugruppen geführt werden.

Dies ermöglicht ebenfalls eine effektive Kühlung und hat den Vorteil, dass insbesondere bei Bestandsanlagen, die bereits Kühlkörper aufweisen, die bisher von einem Kühlmedium wie Wasser durchströmt wurden, diese genutzt werden und vom Kühlgas durchströmt werden können. Auch hier ist eine Nutzung des entsprechenden Abgases als Inertgas in der Lötanlage, beispielsweise in der Vorheizzone oder Lötzone vorteilhafter Weise möglich.

Gemäß einer vorteilhaften Ausgestaltung des Verfahrens wird das Kühlgas nach mindestens einem der folgenden Strömungswege:
- nach Durchströmen der Kühlzone und
- nach Durchströmen des Kühlkörpers als Inertgas mindestens einer der folgenden Zonen zugeführt:
- einer Lötzone, in der ein Lötvorgang an den Flachbaugruppen erfolgt; und
- einer Vorheizzone, in der die Flachbaugruppen vor Erreichen der Lötzone vorgeheizt werden.

Das Abgas des Kühlvorgangs kann somit zur Inertisierung der Lötzone und/oder der Vorheizzone eingesetzt werden. Üblicherweise sind Vorheizzone, Lötzone und Kühlzone durch geeignete Maßnahmen voneinander getrennt, um ein Strömen des Gases von einer Zone in eine andere Zone zu unterbinden. Dies wird beispielsweise durch eine geeignete, zonenweise Atmosphärenführen in den einzelnen Zonen, die diesbezüglich auch noch jeweils Unterzonen aufweisen können, erreicht. Hierdurch kann auch eine thermische Abschottung der einzelnen Zonen oder Unterzonen erreicht. Alternativ oder zusätzlich können geeignete temperaturresistente Mittel zur Abtrennung der Zonen oder Unterzonen voneinander ausgebildet sein, beispielsweise entsprechende Schürzen.

Gemäß einer vorteilhaften Ausgestaltung ist es hier möglich, das Inertgas nach Durchströmen der Kühlzone und/oder nach Durchströmen des Kühlkörpers auf eine vorgebbare Heiztemperatur zu erhitzen.

Dies kann insbesondere durch eine elektrische Beheizung oder durch einen Wärmeübergang von einem Hitzemedium erfolgen. Dadurch kann das Inertgas zum Aufheizen der Vorheiz- und/oder Lötzone eingesetzt werden oder es kann dabei helfen, die Temperatur in diesem Bereich aufrecht zu erhalten. Insbesondere ist es möglich, durch die Aufheizung auf die Heiztemperatur die Temperatur in Vorheiz- und/oder Lötbereich zu regeln.

Gemäß einer weiteren Ausgestaltung des Verfahrens erfolgt die Mischung in einem statischen Mischer.

Ein statischer Mischer ermöglicht in vorteilhafter Weise eine effektive Mischung von flüssigem und gasförmigen Inertgas zum Kühlgas, ohne dass weitere bewegte Teile benötigt werden. Üblicherweise wird beispielsweise ein flüssiges Inertgas wie beispielsweise Stickstoff in einem Tank mit einem relativ hohen Druck vorgehalten, so dass es möglich ist, diesen Druck zur Beförderung des Inertgases in flüssiger Form bis zum Mischer und zum Unterstützen des Mischvorgangs einzusetzen.

Gemäß einer vorteilhaften Ausgestaltung des Verfahrens wird die Temperatur des Kühlgases stromabwärts des Mischers überwacht und als Regelgröße für den Mengenanteil an zuzugebendem flüssigen Inertgas eingesetzt.

So ist es möglich anhand einer Größe, nämlich des Mengen- oder Massenanteils von flüssigem Inertgas an dem Kühlgas, welches durch die entsprechende Mischung von flüssigem und gasförmigen Inertgas erzeugt wird, die Temperatur des Kühlgases vorzugeben und einzustellen. Es hat sich herausgestellt, dass diese Regelgröße einfach und zuverlässig in einem entsprechenden Regelkreislauf einsetzbar ist.

Gemäß einer weiteren vorteilhaften Ausgestaltung des Verfahrens wird mindestens eine der folgenden Temperaturen:
- die Temperatur in der Kühlzone
- die Temperatur des Kühlgases bei Zuführung in die Kühlzone; und
- die Temperatur des Kühlgases bei Zuführung in den Kühlkörper als Regelgröße für mindestens eine der folgenden Größen eingesetzt:
- des Volumenstroms des der Kühlzone zuzuführenden Kühlgases;
- des Volumenstroms an Kühlgas in den Kühlkörper;
- den Mengenanteil an zuzugebendem flüssigen Inertgas bei Mischung des Kühlgases; und
- den Mengenanteil an zuzugebendem gasförmigen Inertgas bei Mischung des Kühlgases.

So ist es möglich, direkt die Temperatur in der Kühlzone als Regelgröße vorzugeben und diese durch Regelung der entsprechenden Volumenströme des der Kühlzone zuströmenden Kühlgases oder des Volumenstroms an Kühlgas in den Kühlkörper einzusetzen. So kann direkt die Temperatur eingestellt werden, die eine möglichst effiziente Abkühlung der Flachbaugruppen nach Verlassen der Lötzone ermöglicht.

Gemäß einer weiteren Ausgestaltung des Verfahrens wird als Inertgas mindestens eines der folgenden Gase eingesetzt wird:
- Stickstoff;
- Argon;
- Helium und
- Kohlendioxid.

Insbesondere der Einsatz von Stickstoff hat sich als vorteilhaft erwiesen, da Stickstoff in hoher Reinheit verfügbar ist und für den Benutzer des Verfahrens kostengünstig ist. Zudem ist der Einsatz von Stickstoff umweltfreundlich und wird regelmäßig bereits als Inertgas im Lötprozeß eingesetzt, so dass hier gegebenenfalls ein doppelter Nutzen gezogen werden kann, so dass die Effizienz des Prozesses weiterhin gesteigert wird. Helium bewirkt einen guten Wärmeübergang und erlaubt so eine besonders effektive Kühlung.

Gemäß einem weiteren Aspekt der vorliegenden Erfindung wird eine Vorrichtung zum Abkühlen von gelöteten Flachbaugruppen vorgeschlagen, die einen Mischer zum Mischen von gasförmigem und flüssigem Inertgas umfasst, welcher einen Gasanschluss zur Zuführung von gasförmigem Inertgas, einen Flüssiganschluss zur Zuführung von flüssigem Inertgas und einen Kühlgasausgang aufweist, welcher mit einer Kühlzone einer Lötanlage verbindbar ist.

Eine solche Vorrichtung kann besonders bevorzugt zur Durchführung des erfindungsgemäßen Verfahrens eingesetzt werden und an den Einsatz des erfindungsgemäßen Verfahrens angepasst sein. Hierbei ist es vorteilhaft, wenn der Kühlgasausgang entweder mit einem Gaseingang der Kühlzone in strömungstechnischer Verbindung bringbar ist und/oder mit einem Eingang eines Kühlkörpers in strömungstechnische Verbindung bringbar ist.

Eine Ausgestaltung der Vorrichtung umfasst weiterhin
- ein Flüssiggasventil zur Zudosierung des flüssigen Inertgases zum Mischer;
- ein Gasventil zur Zudosierung des gasförmigen Inertgases zum Mischer; und
- eine Kontrolleinheit, geeignet und bestimmt zur Durchführung des erfindungsgemäßen Verfahrens, welche mit dem Flüssiggasventil und dem Gasventil so verbunden ist, dass zumindest eine Betätigung des Flüssiggasventils und des Gasventils durch die Kontrolleinheit erfolgen kann.

Gemäß einer weiteren Ausgestaltung ist ein Temperaturfühler zur Messung der Temperatur am Kühlgasausgang ausgebildet.

Als Temperaturfühler kann insbesondere ein Widerstandssensor wie beispielsweise ein platinbasierter Widerstandssensor eingesetzt werden.

Gemäß einer weiteren Ausgestaltung der Vorrichtung ist mindestens ein mit dem Kühlgasausgang verbundener Kühlkörper ausgebildet, über den Flachbaugruppen führbar sind.

Dieser Kühlkörper kann besonders bevorzugt Teil einer Lötanlage und dort in der Kühlzone ausgebildet sein.

Gemäß einer weiteren Ausgestaltung der Vorrichtung ist der Mischer ein statischer Mischer.

Ein statischer Mischer hat sich als besonders vorteilhaft zur Mischung von flüssigem Inertgas und gasförmigem Inertgas herausgestellt.

Die für das erfindungsgemäße Verfahren offenbarten Details und Vorteile lassen sich auf die erfindungsgemäße Vorrichtung anwenden und übertragen und umgekehrt. Im Folgenden wird die Erfindung anhand der beigefügten Figuren näher erläutert, ohne auf die dort gezeigten Details und Ausführungsbeispiele beschränkt zu sein. Es zeigen schematisch und exemplarisch:
- Fig. 1:: ein erstes Beispiel einer Vorrichtung zum Abkühlen von Flachbaugruppe;
- Fig. 2:: ein zweites Beispiel einer Vorrichtung zum Abkühlen von Flachbaugruppen; und
- Fig. 3: ein drittes Beispiel einer Vorrichtung zum Abkühlen von Flachbaugruppen.

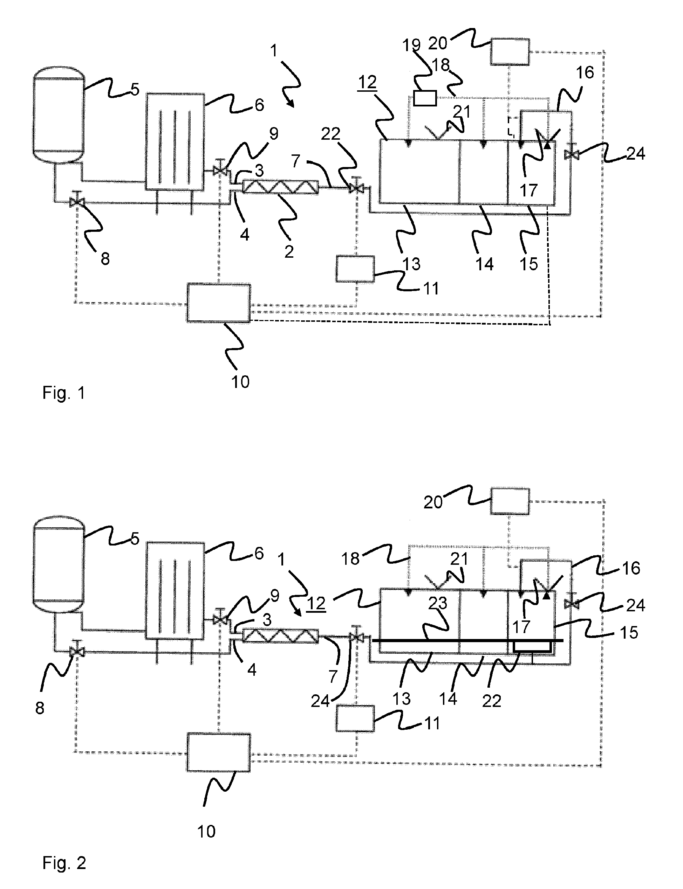

Fig. 1 zeigt ein erstes Beispiel eine Vorrichtung 1 zum Abkühlen (nicht gezeigter) Flachbaugruppen. Die Vorrichtung 1 umfasst einen Mischer 2 zum Mischen von gasförmigem und flüssigem Inertgas, im vorliegenden Beispiel Stickstoff. Die hier offenbarten Details lassen sich aber auch ohne weiteres auf andere Inertgase übertragen. Der Mischer 2 ist ein statischer Mischer und weist einen Gasanschluss 3 zur Zuführung von gasförmigem Inertgas und einen Flüssiganschluss 4 zur Zuführung von flüssigem Inertgas auf. Im Mischer 2 erfolgt die Mischung von flüssigem Stickstoff aus einem Stickstoffreservoir 5, welches flüssigen Stickstoff enthält, und gasförmigem Stickstoff. Letzterer wird in einem Verdampfer 6 generiert, in welchen flüssiger Stickstoff aus dem Stickstoffreservoir 5 strömt. Alternativ oder zusätzlich ist es auch möglich, gasförmigen Stickstoff aus anderen Quellen zuzuführen, beispielsweise aus entsprechenden Druckgasbehältern, beispielsweise Gasflaschen.

Das Stickstoffreservoir 5 ist mit dem Flüssiganschluss 4 des Mischers 2 und der Verdampfer 6 mit dem Gasanschluss 3 des Mischers 2 verbunden. Der Mischer 2 umfasst ferner einen Kühlgasausgang 7, über den das Kühlgas, welches durch die Mischung aus flüssigem und gasförmigem Stickstoff entsteht, den Mischer 2 verlässt.

Die Temperatur des Kühlgases ist vorgebbar, insbesondere über das Mengenverhältnis von flüssigem und gasförmigem Stickstoff. Je nach vorgegebener Temperatur enthält das Kühlgas mehr oder weniger große Anteile an flüssigem Stickstoff und gegebenenfalls auch keinen flüssigen Stickstoff. Die Menge an flüssigem Stickstoff kann dabei über ein Flüssiggasventil 8 geregelt werden, während die Menge an gasförmigem Stickstoff über ein Gasventil 9 geregelt werden kann. Flüssiggasventil 8 und Gasventil 9 sind über Datenleitungen (hier gepunktet gezeigt) mit einer Kontrolleinheit 10 verbunden, die geeignet und bestimmt zur Durchführung des erfindungsgemäßen Verfahrens ist. Die Menge an zuzuführendem flüssigem und/oder gasförmigem Inertgas wird dabei in der Kontrolleinheit 10 basierend auf den Daten eines ersten Temperaturfühlers 11 und/oder eines zweiten Temperaturfühlers 20 bestimmt und Flüssigasventil 8 und Gasventil 9 werden entsprechend zur Anpassung der notwendigen Volumenströme durch die Kontrolleinheit 10 geregelt angesteuert. Ferner ist die Kontrolleinheit 10 mit zwei Kühlgasventilen 24 verbunden, über die der Strom an Kühlgas gesteuert werden kann.

Teil der Kontrolleinheit 10 kann auch eine Steuerung einer Lötanlage 12 sein. So ist es insbesondere möglich, bei der Steuerung der Lötanlage 12 Temperaturprofile für die einzelnen Zonen der Lötanlage vorzugeben, die beispielsweise anhand des zu verlötenden Produktes wählbar sind. Hierzu sind gegebenenfalls entsprechende Datenleitungen zwischen Kontrolleinheit 10 und Lötanlage 12 ausgebildet.

Ferner umfasst die Vorrichtung 1 einen ersten Temperaturfühler 11, mit dem die Temperatur am Kühlgasausgang 7 bestimmt werden kann. Fig. 1 zeigt ferner eine Lötanlage 12 zum Verlöten von elektronischen Komponenten mit einer Platine, so genannten Flachbaugruppen . Die Flachbaugruppen werden in dieser Darstellung von links nach rechts durch die Lötanlage 12 transportiert, bevorzugt auf einem hier nicht gezeigten Transportband. Die Lötanlage 12 umfasst in diesem Beispiel eine Vorheizzone 13, eine Lötzone 14 und eine Kühlzone 15. In der Vorheizzone 13 werden die Flachbaugruppen vorgeheizt, bis sie in der Lötzone 14 die Schmelztemperatur des Lotes erreichen beziehungsweise übersteigen und mit dem Lot in Kontakt gebracht werden. In der Kühlzone 15 werden die nun mit Lot versehenen Flachbaugruppen wieder abgekühlt. Die Erfindung ist auf alternative Lötkonzepte wie beispielsweise Schwalllötanlagen und weitere Lötverfahren übertrag- und anwendbar.

Im Betrieb wird im Mischer 2 Kühlgas aus flüssigem und gasförmigem Inertgas, hier beispielsweise Stickstoff, erzeugt. Der Stickstoff wird über den Kühlgasausgang 7 aus dem Mischer 2 transportiert. Über eine Kühlgaszuführleitung 16 wird das entstandene Kühlgas in die Kühlzone 15 eingeleitet. Gegebenenfalls noch vorhandenes flüssiges Inertgas verdampft spätestens in der Kühlzone 15, so dass auch die entsprechende Verdampfungsenthalpie zur Kühlung der Flachbaugruppen verwendet werden kann. Überschüssige Kühlgasatmosphäre wird über einen Kühlzonenabgasausgang 17 aus der Kühlzone 15 abgezogen und über eine Inertgaszuführleitung 18 der Vorheizzone 13 und der Lötzone 14 zur Inertisierung zugeführt. Dabei kann das Inertgas über Heizmittel 19 aufgeheizt werden, wenn nötig. Über einen zweiten Temperaturfühler 20 kann wahlweise die Temperatur des Kühlgases in der Kühlgaszuführleitung 16 oder in der Kühlzone 15 überwacht werden. Der zweite Temperaturfühler 20 ist ebenfalls über eine (gepunktet dargestellte) Datenleitung mit der Kontrolleinheit 10 verbunden. Über einen Vorheizzonenabgasausgang 21 wird das Abgas aus Vorheizzone 13 und gegebenenfalls aus der Lötzone 14 abgeführt.

Der Einsatz von Kaltgas zur Kühlung der Flachbaugruppen in der Kühlzone 15 der Lötanlage 12 ist vorteilhaft, da so eine effizientere Kühlung als über eine indirekte Kühlung mit einem Kältemedium als Wärmeträger und entsprechenden Wärmetauschern erreicht werden kann. So kann eine optimale Kühlung der Baugruppen erfolgen mit einem größeren Temperaurgradienten als bei einer konventionellen Kühlung. Die Temperatur des Kühlgases, welches in die Kühlzone 15 eingebracht wird, ist vorgebbar und durch das Mengenverhältnis von flüssigem und gasförmigem Inertgas im Mischer 2 einstellbar. Insbesondere kann auch der maximal mögliche Temperaturgradient, den die Flachbaugruppen beziehungsweise die verlöteten elektronischen Elemente ohne Schädigung erfahren können, durch eine entsprechende Kühlung auf tiefe Temperaturen und so eine möglichst schnelle Abkühlung erreicht werden.

Fig. 2 zeigt ein zweites Beispiel einer Vorrichtung 1, die in weiten Teilen identisch zum ersten Beispiel wie in Fig. 1 gezeigt ist. Es werden daher hier nur die Unterschiede zum ersten Beispiel aufgezeigt, im Übrigen wird auf die Beschreibung zu Fig. 1 verwiesen. Zusätzlich zur Zugabe des Kühlgases zur Kühlzone 15 wird in diesem Beispiel ein Teil des Kühlgases einem Kühlkörper 22 zugeführt. Dies kann auch alternativ zur Zugabe des Kühlgases in die Kühlzone 15 erfolgen. Der Kühlkörper 22 ist unter einem Förderband 23 der Lötanlage 12 ausgebildet, so dass die Flachbaugruppen im Betrieb über den Kühlkörper 22 transportiert werden.

Hierdurch kann eine deutliche Verbesserung der Kühleffizienz in Bestandsanlagen erreicht werden, in dem beispielsweise vorhandene Kühlkörper 22 auf das erfindungsgemäße Verfahren umgestellt werden oder in dem nur geringe Umbauten notwendig sind. Die Kühlung über einen Kühlkörper 22 ermöglicht eine sehr gleichmäßige Kühlung der Flachbaugruppen, so dass sich bei der Kühlung induzierte thermische Spannungen nur in geringem Maße aufbauen.

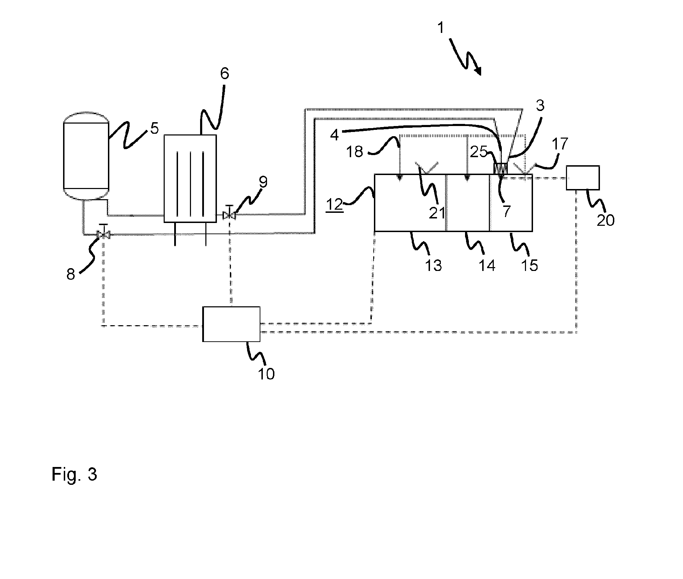

Fig. 3 zeigt ein drittes Beispiel einer, Vorrichtung 1. Im Unterschied zu den Beispielen aus den Fig. 1 und 2 ist hier nicht ein zentraler Mischer 2 ausgebildet, der gegebenenfalls für mehrere Lötanlagen 12 gemeinsam eingesetzt werden kann, beispielsweise wenn in mehreren Lötanlagen 12 gleiche Produkte gelötet werden, sondern es wird ein dezentraler Mischer 25 eingesetzt, der direkt oder sehr nahe benachbart an einer Kühlzone 15 ausgebildet ist und nur für eine einzige Lötanlage 15 und für eine Kühlzone 22 derselben eingesetzt wird. Der dezentrale Mischer 25 kann dabei bevorzugt einen Ventilator umfassen, der für eine bestimmte Strömung des Kühlgases in der Kühlzone 15 sorgt. Überschüssige Kühlgasatmosphäre wird über einen Kühlzonenabgasausgang 17 aus der Kühlzone 15 abgezogen und über eine Inertgaszuführleitung 18 der Vorheizzone 13 und der Lötzone 14 zur Inertisierung zugeführt. Über einen Vorheizzonenabgasausgang 21 wird das Abgas aus Vorheizzone 13 und gegebenenfalls aus der Lötzone 14 abgeführt.

Der dezentrale Mischer 25 weist einen Gasanschluss 3 und einen Flüssiggasanschluss 4 auf, die über Gasventil 9 und Flüssiggasventil 10 mit dem Stickstoffreservoir 5 und dem Verdampfer 6 verbunden sind. Im Mischer 25 erfolgt die Mischung von gasförmigem und flüssigem Inertgas, das Kühlgaswird über den Kühlgasausgang 7 direkt in die Kühlzone 15 eingebracht. Gasventil 9 und Flüssiggasventil 10 sind über Datenleitungen (gestrichelt gezeichnet) mit einer Kontrolleinheit 10 verbunden, die geeignet und bestimmt zur Durchführung des oben beschriebenen Verfahrens ist. Die Kontrolleinheit 10 ist weiterhin mit einem zweiten Temperaturfühler 20 verbunden, der die Temperatur des in die Kühlzone 15 aus dem Mischer 25 einströmenden Kühlgases bestimmt und als Regelgröße für die Menge an zuzugebendem flüssigem Stickstoff, an zuzugebendem gasförmigem Stickstoff und/oder der Menge an in die Kühlzone 15 zuzugebendem Kühlgas verwendet.

Das erfindungsgemäße Verfahren und die erfindungsgemäße Vorrichtung erlauben in vorteilhafter Weise eine hocheffiziente Kühlung von Flachbaugruppen nach dem Lötvorgang. Das Kühlgas kann nach dem Abziehen aus der Kühlzone 15 vorteilhaft zur Inertisierung der Lötanlage 2 eingesetzt werden.

### Bezugszeichenliste

- 1: Vorrichtung zum Abkühlen von gelöteten Flachbaugruppen
- 2: Mischer
- 3: Gasanschluss
- 4: Flüssiganschluss
- 5: Stickstoffreservoir
- 6: Verdampfer
- 7: Kühlgasausgang
- 8: Flüssiggasventil
- 9: Gasventil
- 10: Kontrolleinheit
- 11: erster Temperaturfühler
- 12: Lötanlage
- 13: Vorheizzone
- 14: Lötzone
- 15: Kühlzone
- 16: Kühlgaszuführleitung
- 17: Kühlzonenabgasausgang
- 18: Inertgaszuführleitung
- 19: Heizmittel
- 20: zweiter Temperaturfühler
- 21: Vorheizzonenabgasausgang
- 22: Kühlkörper
- 23: Förderband
- 24: Kühlgasventil
- 25: Mischer

## Patentansprüche

1. Verfahren zum Abkühlen von gelöteten Flachbaugruppen in einer Kühlzone einer Lötanlage durch mindestens ein Inertgas umfassendes Kühlgas, bei dem das Kühlgas durch eine Mischung des gasförmigen und des flüssigen Inertgases erhalten wird.

2. Verfahren nach Anspruch 1, bei dem das Kühlgas in die Kühlzone eingeleitet wird.

3. Verfahren nach Anspruch 2, bei dem das Kühlgas mit einer vorgebbaren Temperatur in die Kühlzone eingeleitet wird.

4. Verfahren nach einem der vorhergehenden Ansprüche, bei dem das Kühlgas durch einen Kühlkörper geleitet wird, über den die Flachbaugruppen geführt werden.

5. Verfahren nach einem der Ansprüche 2 bis 4, bei dem das Kühlgas nach mindestens einem der folgenden Strömungswege:
- nach Durchströmen der Kühlzone und
- nach Durchströmen des Kühlkörpers als Inertgas mindestens einer der folgenden Zonen zugeführt wird:
- einer Lötzone, in der ein Lötvorgang an den Flachbaugruppen erfolgt; und
- einer Vorheizzone, in der die Flachbaugruppen vor Erreichen der Lötzone vorgeheizt werden.

6. Verfahren nach Anspruch 5, bei dem das Inertgas auf eine vorgebbare Heiztemperatur erhitzt wird.

7. Verfahren nach einem der vorhergehenden Ansprüche, bei dem die Mischung in einem statischen Mischer erfolgt.

8. Verfahren nach Anspruch 7, bei dem die Temperatur des Kühlgases stromabwärts des Mischers überwacht und als Regelgröße für den Mengenanteil an zuzugebendem flüssigen Inertgas eingesetzt wird.

9. Verfahren nach einem der vorhergehenden Ansprüche, bei dem mindestens eine der folgenden Temperaturen:
- die Temperatur in der Kühlzone
- die Temperatur des Kühlgases bei Zuführung in die Kühlzone; und
- die Temperatur des Kühlgases bei Zuführung in den Kühlkörper als Regelgröße für mindestens eine der folgenden Größen eingesetzt wird:
- den Volumenstrom des der Kühlzone zuzuführenden Kühlgases;
- den Volumenstrom an Kühlgas in den Kühlkörper;
- den Mengenanteil an zuzugebendem flüssigen Inertgas bei Mischung des Kühlgases; und
- den Mengenanteil an zuzugebendem gasförmigen Inertgas bei Mischung des Kühlgases.

10. Verfahren nach einem der vorhergehenden Ansprüche, bei dem als Inertgas mindestens eines der folgenden Gase eingesetzt wird:
- Stickstoff;
- Argon;
- Helium und
- Kohlendioxid.

11. Vorrichtung (1) zum Abkühlen von gelöteten Flachbaugruppen umfassend einen Mischer (2, 25) zum Mischen von gasförmigem und flüssigem Inertgas, welcher einen Gasanschluss (3) zur Zuführung von gasförmigem Inertgas, einen Flüssiganschluss (4) zur Zuführung von flüssigem Inertgas und einen Kühlgasausgang (7) aufweist, welcher mit einer Kühlzone (15) einer Lötanlage (12) verbindbar ist.

12. Vorrichtung (1) nach Anspruch 11, weiterhin umfassend
- ein Flüssiggasventil (8) zur Zudosierung des flüssigen Inertgases zum Mischer; (2, 25)
- ein Gasventil (9) zur Zudosierung des gasförmigen Inertgases zum Mischer (3, 25); und
- eine Kontrolleinheit (10), geeignet und bestimmt zur Durchführung des Verfahrens nach einem der Ansprüche 1 bis 10, welche mit dem Flüssiggasventil (8) und dem Gasventil (9) so verbunden ist, dass zumindest eine Betätigung des Flüssiggasventils (8) und des Gasventils (9) durch die Kontrolleinheit (10) erfolgen kann.

13. Vorrichtung (1) nach einem der Ansprüche 11 bis 12, bei der ein Temperaturfühler (11, 20) zur Messung der Temperatur am Kühlgasausgang (7) ausgebildet ist.

14. Vorrichtung (1) nach einem der Ansprüche 11 bis 13, bei der mindestens ein mit dem Kühlgasausgang (7) verbundener Kühlkörper (22) ausgebildet ist, über den Flachbaugruppen führbar sind.

15. Vorrichtung (1) nach einem der Ansprüche 11 bis 14, bei der der Mischer (2, 25) einen statischen Mischer umfasst.
